# EUROPÄISCHE PATENTSCHRIFT

(11) **EP 1 731 772 B1**
(45) Veröffentlichungstag und Bekanntmachung des Hinweises auf die Patenterteilung: **21.04.2010**
(21) Anmeldenummer: 06011274.5
(22) Anmeldetag: 31.05.2006
(51) Int. Cl.: F16B 5/02

(54) **Toleranzausgleichsanordnung aus Kunststoff**
Tolerance compensating arrangement made from plastic material
Dispositif de compensation de tolérances en matière plastique

(30) Priorität: 08.06.2005 DE 202005009017 U
(43) Veröffentlichungstag der Anmeldung: 13.12.2006
(73) Patentinhaber: Böllhoff Verbindungstechnik GmbH, 33649 Bielefeld (DE)
(72) Erfinder: Seidl, Jörg, 90596 Schwanstetten (DE); Klein, Uwe, 66879 Steinwenden (DE); Figge, Hans-Ulrich, 33758 Schloß-Holte (DE); Hesse, Wolfgang, 33397 Rietberg (DE)
(74) Vertreter: Hauck Patent- und Rechtsanwälte

(56) Entgegenhaltungen:
- EP-B1- 0 176 663
- DE-U1- 20 313 241

## Beschreibung

Die vorliegende Erfindung betrifft eine Toleranzausgleichsanordnung zum selbsttätigen Ausgleichen von Toleranzen im Abstand zwischen zwei vormontierten bzw. zu montierenden, miteinander zu verspannenden Bauteilen.

Derartige Toleranzausgleichsanordnungen sind in großer Vielfalt bekannt, siehe beispielsweise EP 0 176 663 B1, DE 42 24 575 C2, DE 101 51 383 A1, DE-GM 201 190012 und DE-GM 203 14 003. Sie dienen dazu, fertigungs- und/oder montagebedingte Toleranzen zwischen den vormontierten Bauteilen auszugleichen. Zu diesem Zweck haben diese Toleranzausgleichsanordnungen üblicherweise eine Verstellbuchse mit einem sogenannten Mitschleppabschnitt, der mit einer Befestigungsschraube eine Reibschlussverbindung eingehen kann. Beim Drehen der Befestigungsschraube wird daher die Verstellbuchse mitgedreht, bis sie sich an eines der zu verspannenden Bauteile anlegt, worauf dann beim Weiterdrehen der Befestigungsschraube und entsprechender Erhöhung des Drehmomentes die Reibschlussverbindung überwunden wird, so dass dann die beiden Bauteile durch die Befestigungsschraube über die Verstellbuchse miteinander verspannt werden können.

Die vorbekannten Toleranzausgleichsanordnungen bestehen üblicherweise entweder insgesamt oder teilweise aus metallischen Teilen, wobei die nicht metallischen Teile z.B. aus einem thermoplastischen Kunststoff bestehen. Diese vorbekannten Toleranzausgleichsanordnungen sind relativ kostenaufwendig und haben im Fall der Verwendung von thermoplastischen Kunststoffen den Nachteil, dass die Verspannung der beiden Bauteile durch die Relaxation des Kunststoffes nachlässt.

Eine Toleranzausgleichsanordnung nach dem Oberbegriff des Anspruchs 1 ist aus dem Dokument DE 203 13 241 U1 bekannt.

Der vorliegenden Erfindung liegt die Aufgabe zugrunde, eine Toleranzausgleichsanordnung zum selbsttätigen Ausgleichen von Toleranzen im Abstand zwischen zwei miteinander zu verspannenden Bauteilen zu schaffen, die kostengünstig herstellbar ist und einen für eine Fertigung aus Kunststoff geeigneten konstruktiven Aufbau hat.

Diese Aufgabe wird durch die im Anspruch 1 definierte Toleranzausgleichsanordnung gelöst. Zudem hat Anspruch 15 eine erfindungsgemäße Baueinheit der Toleranzausgleichsanordnung zum Gegenstand.

Die erfindungsgemäß ausgebildete Toleranzausgleichsanordnung umfasst zusätzlich zu einem Grundelement und einer Verstellbuchse einen Mitnehmer, der als getrenntes Bauteil ausgebildet und mit der Verstellbuchse lösbar verbunden ist. Der Mitnehmer hat mehrere in Umfangsrichtung verteilte, elastisch nachgebende Klemmabschnitte, die mit dem Gewinde der Befestigungsschraube eine oberhalb eines vorgegebenen Drehmomentes lösbare Reibschlussverbindung bilden.

Da der Mitnehmer, der die für den Toleranzausgleich erforderliche Mitschleppfunktion ausübt, ein getrenntes Bauteil ist, lassen sich die Einzelteile der Toleranzausgleichsanordnung auf vergleichsweise einfache Weise herstellen. Die Erfindung ermöglicht darüber hinaus eine "Ganzkunststofflösung", bei der sowohl das Grundelement und die Verstellbuchse wie auch der Mitnehmer aus Kunststoff bestehen.

Insbesondere bietet die Erfindung die Möglichkeit, das Grundelement und die Verstellbuchse aus einem relaxationsarmen Kunststoff wie z.B. einem duromeren Kunststoff herzustellen. Da diese Materialien eine Relaxation nahezu Null haben, bleibt auch bei langfristigem Einsatz wie auch bei hohen Druckbelastungen eine sichere Verspannung der beiden Bauteile erhalten. Grundsätzlich könnte jedoch auch ein anderer Kunststoff wie z.B. ein thermoplastischer Werkstoff verwendet werden.

Der Mitnehmer besteht vorzugsweise aus einem elastisch nachgiebigen Kunststoff wie z.B. einem thermoplastischen Kunststoff, um mit dem Gewinde der Befestigungsschraube die Reibschlussverbindung eingehen und damit die Mitschleppfunktion ausüben zu können.

Vorzugsweise bilden das Grundelement, die Verstellbuchse und der Mitnehmer eine vormontierbare Baueinheit, die als solche gelagert, transportiert und in anderer Weise gehandhabt werden kann.

Vorteilhafte Ausgestaltungen und Weiterbildungen der Erfindung sind in den Unteransprüchen definiert.

Anhand der Zeichnungen wird ein Ausführungsbeispiel der Erfindung näher erläutert. Es zeigt:
Fig. 1 eine perspektivische Ansicht einer Baueinheit einer erfindungsgemäß ausgebildeten Toleranzausgleichsanordnung im vormontierten Zustand;
Fig. 2 eine perspektivische Explosionsdarstellung der Baueinheit in Fig. 1;
Fig. 3 einen Längsschnitt durch die Baueinheit der Fig. 1 in Blickrichtung der Pfeile III-III in Fig. 4;
Fig. 4 eine Draufsicht auf die Baueinheit der Figuren 1 und 3;
Fig. 5 eine Seitenansicht der Baueinheit der vorhergehenden Figuren;
Fig. 6 eine Schnittansicht in Blickrichtung der Pfeile VI-VI in Fig. 5;
Fig. 7 eine Ansicht des Details B in Fig. 6 in vergrößertem Maßstab;
Fig. 8 eine Schnittansicht der Toleranzausgleichsanordnung in Blickrichtung der Pfeile VIII-VIII in Fig. 10 vor der Montage;
Fig. 9 eine der Fig. 8 entsprechende Schnittansicht der Toleranzausgleichsanordnung nach der Montage;
Fig. 10 eine Draufsicht auf die Toleranzausgleichsanordnung der Figuren 8, 9.

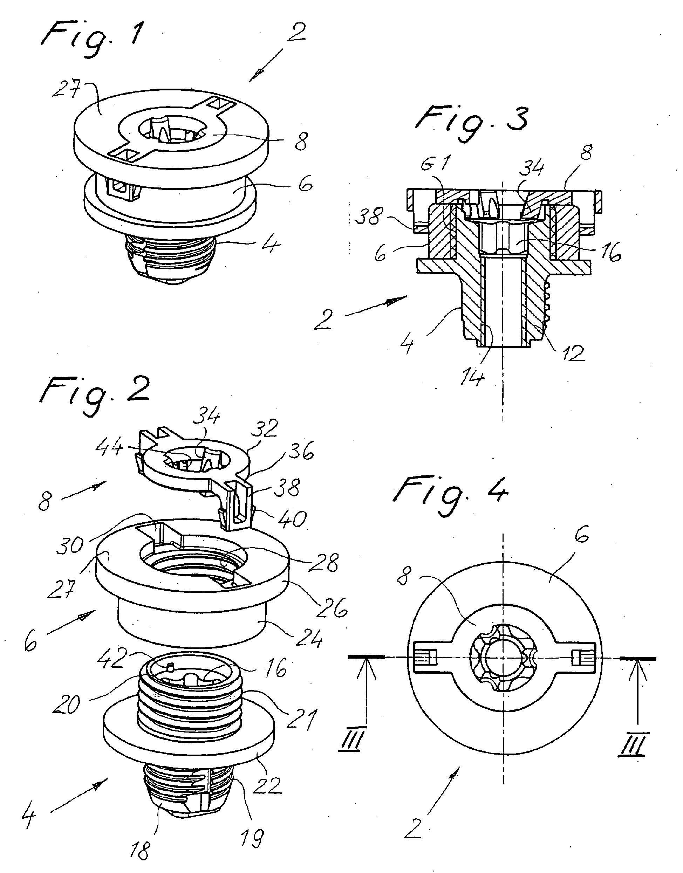

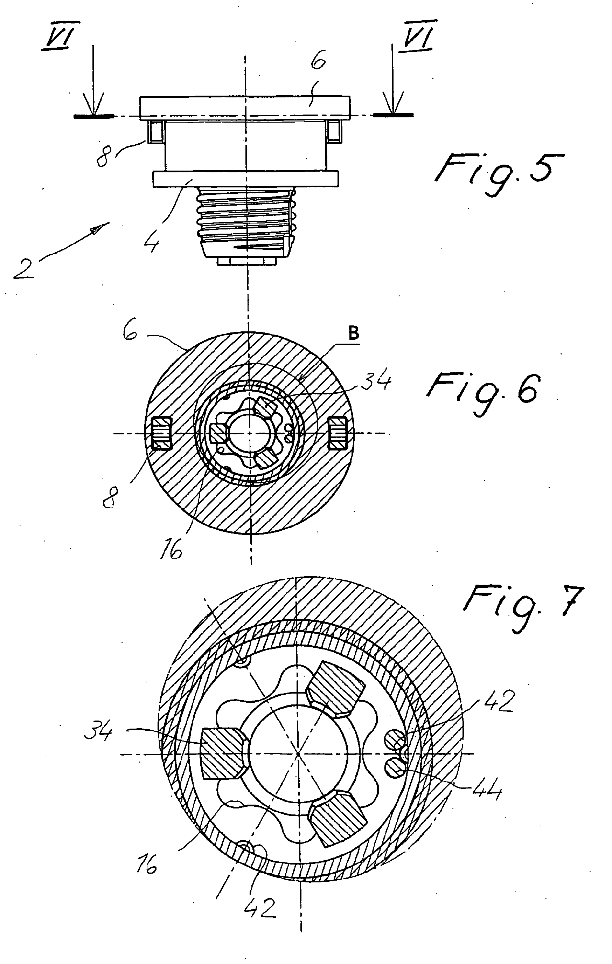

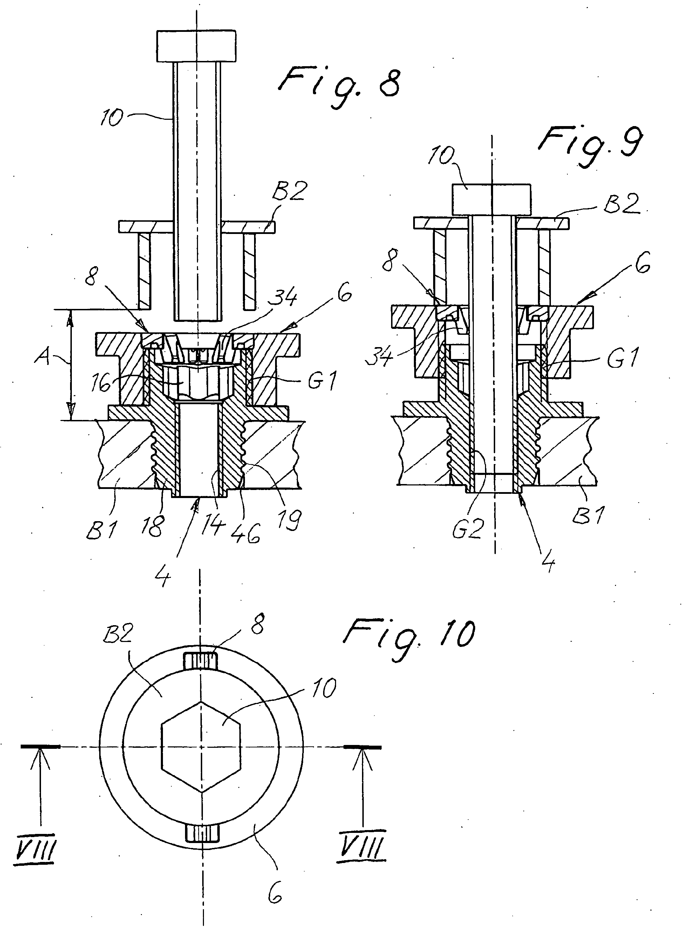

Die Figuren 1 bis 7 zeigen eine Baueinheit 2 für eine Toleranzausgleichsanordnung, wie sie in den Figuren 8 bis 10 dargestellt ist. Die Baueinheit 2, die zusammen mit einer herkömmlichen Befestigungsschraube 10 (Figuren 8, 9) die Toleranzausgleichsanordnung bildet, besteht aus einem Grundelement 4, einer Verstellbuchse 6 und einem Mitnehmer 8, wie insbesondere in der Fig. 2 zu sehen ist.

Das Grundelement 4 (siehe insbesondere Figuren 2 und 3) besteht aus einem hülsenförmigen Körper 12 mit einer durchgehenden Bohrung, die ein Innengewinde 14 und, angrenzend hierzu, ein Antriebsmerkmal 16 zum Ansetzen eines Werkzeuges (nicht gezeigt) aufweist. Das Antriebsmerkmal 16 ist im dargestellten Ausführungsbeispiel als Innensechsrund ausgebildet, kann jedoch auch anders gestaltet sein.

Der hülsenförmige Körper 12 setzt sich aus einem Befestigungsabschnitt 18 und einem Verstellabschnitt 20 zusammen, die durch einen ringförmigen Flansch 22 getrennt sind. Der Befestigungsabschnitt 18 hat im dargestellten Ausführungsbeispiel an seinem Außenumfang ein Gewinde 19 und dient zum Festlegen des Grundelementes 4 an einem ersten Bauteil B1 (Figuren 8, 9), wie noch genauer erläutert wird.

Der Verstellabschnitt 20 ist an seinem Außenumfang mit einem Verstellgewinde 21 versehen, das mit der Verstellbuchse 6 verschraubbar ist, wie ebenfalls noch genauer erläutert wird.

Die Verstellbuchse 6 ist als im wesentlichen hohlzylinderischer Körper 24 mit einem Flansch 26 ausgebildet, der am einen axialen Ende des hohlzylindrischen Körpers 24 angeformt ist. Der Körper 24 hat eine durchgehende Bohrung mit einem Gewinde 28, das mit dem Verstellgewinde 21 des Grundelementes 4 eine erste Gewindepaarung G1 (Fig. 9) bildet. Die Verstellbuchse 6 ist mit einer den Flansch 26 durchdringenden Ausnehmung 30 versehen, deren Form an die Form des Mitnehmers 8 angepasst ist, so dass sie den Mitnehmer 8 aufnehmen kann.

Der Mitnehmer 8 ist als Ringkörper 32 ausgebildet, an dessen inneren Umfang mehrere über den Umfang verteilte, radial nach innen ragende Klemmvorsprünge 34 angeformt sind. Im dargestellten Ausführungsbeispiel sind drei Klemmvorsprünge 34 vorgesehen; es sind jedoch auch mehr oder weniger Klemmvorsprünge möglich.

Der Ringkörper 32 ist ferner mit zwei diametral gegenüberliegenden, radial nach außen verlaufenden Haltearmen 36 versehen, die an ihren äußeren Enden in senkrecht dazu verlaufende axiale Halteansätze 38 übergehen. Die Halteansätze 38 haben ein U-förmiges Profil und sind an in Umfangsrichtung gegenüberliegenden Seiten jeweils mit einer Rastnase 40 versehen, wie in Fig. 2 unschwer zu erkennen ist.

Die aus dem Grundelement 4, der Verstellbuchse 6 und dem Mitnehmer 8 bestehende Baueinheit 2 wird in einer Vormontage zusammengesetzt. Zu diesem Zweck wird der Mitnehmer 8 von oben her in die Ausnehmung 30 der Verstellbuchse 6 eingesetzt. Die Form des Mitnehmers 8 und die Form der Ausnehmung 30 sind so aufeinander abgestimmt, dass der Ringkörper 32 mit den Haltearmen 36 vollständig von der Verstellbuchse 6 aufgenommen wird, so dass die Oberseite des Mitnehmers 8 zu der Stirnseite 27 der Verstellbuchse 6 fluchtet (s. Fig. 1) oder leicht zurückliegt. Die Halteansätze 38 der Haltearme 36 haben aufgrund des U-förmigen Profils eine gewisse Elastizität, so dass die Haltenasen 40 beim Einsetzen des Mitnehmers 8 in die Verstellbuchse 6 unter die Unterseite des Flansches 26 schnappen, wodurch der Mitnehmer 8 an der Verstellbuchse 6 lösbar gehalten wird.

Die Verstellbuchse 6 zusammen mit dem Mitnehmer 8 wird nun mit dem Verstellabschnitt 20 des Grundelementes 4 verschraubt, wobei das Gewinde 28 der Verstellbuchse 6 und das Verstellgewinde 21 des Grundelementes 4, wie bereits erwähnt, die erste Gewindepaarung G1 (Figuren 8, 9) bilden. Im dargestellten Ausführungsbeispiel ist das Verstellgewinde 21 des Grundelementes als Außengewinde und das Gewinde 28 der Verstellbuchse 6 als Innengewinde ausgebildet. Statt dessen könnten das Grundelement 4 und die Verstellbuchse 6 konstruktiv auch so gestaltet werden, dass das Verstellgewinde des Grundelementes ein Innengewinde und das zugehörige Gewinde der Verstellbuchse 6 ein Außengewinde ist.

Wie insbesondere in Fig. 2 und den Figuren 6 und 7 zu sehen ist, sind das Grundelement 4 und der Mitnehmer 8 mit Arretierungsmitteln in Form von Noppen 42, 44 versehen, die für eine Arretierung der Verstellbuchse 6 relativ zum Grundelement 4 für eine Transportsicherung sorgen. Genauer gesagt, ist das Grundelement mit drei über den Umfang verteilten Noppen 42 versehen, die jeweils rastend zwischen zwei axial verlaufende Noppen 44 des Mitnehmers 8 eingreifen können. Die Verwendung von drei über den Umfang verteilten Noppen 42 ermöglicht beispielsweise bei einer Gewindesteigung von 1,5mm eine Rastung zwischen 0 und maximal 0,5mm. Es versteht sich jedoch, dass auch eine andere Anzahl von Noppen 42 möglich ist.

Wie bereits eingangs erwähnt, bestehen die Einzelteile der Baueinheit 2 sämtlich aus Kunststoff. Das Grundelement 4 und die Verstellbuchse 6 bestehen zweckmäßigerweise aus einem harten, relaxationsarmen Kunststoff, insbesondere aus einem duroplastischen Kunststoff wie z.B. einer Phenolharzmasse PF6771. Duroplastische Werkstoffe haben den Vorteil einer sehr geringen Relaxation. Je nach Anwendung kann jedoch auch ein anderer Werkstoff wie z.B. ein thermoplastischer Kunststoff verwendet werden.

Der Mitnehmer 8 besteht zweckmäßigerweise aus einem thermoplastischen Kunststoff, der den Klemmvorsprüngen 34 eine ausreichende Elastizität zum Ausüben einer Mitschleppfunktion verleiht. In Frage kommt beispielsweise ein glasfaserverstärktes Polyamid, so etwa PA6GF50.

Anhand der Figuren 8 bis 10 werden nun die Montage und Funktionsweise der Toleranzausgleichsanordnung beschrieben. Die Toleranzausgleichsanordnung dient zum Verspannen der Bauteile B 1 und B2, die in ihrer dargestellten Lage vormontiert sind. Die Bauteile B1 und B2 haben einen Abstand A, der aufgrund von fertigungs- und/oder montagebedingten Toleranzen unterschiedlich groß sein kann. Beim Verspannen der beiden Bauteile B 1 und B2 muss daher ein entsprechender Toleranzausgleich vorgenommen werden.

Zunächst wird die Baueinheit 2 mit dem Bauteil B 1 verbunden, indem der Befestigungsabschnitt 18 in das Bauteil B 1 eingeschraubt wird. Im dargestellten Ausführungsbeispiel ist das Gewinde 19 des Befestigungsabschnittes 18 als ein an sich bekanntes selbstschneidendes und/oder ―furchendes Gewinde ausgebildet, das in einer zylindrischen Bohrung 46 des Bauteils B 1 ein entsprechendes Gegengewinde formt, wenn das Grundelement 4 über das Antriebsmerkmal 16 mit Hilfe eines (nicht gezeigten) Werkzeuges in das Bauteil B1 eingedreht wird.

Eine derartige Kunststoff in-Kunststoff(K'-in-K')-Gewindeverbindung zwischen dem Grundelement 4 und dem Bauteil B1 ist möglich, wenn ein entsprechendes Festigkeitsgefälle zwischen dem Bauteil B1 und dem Grundelement 4 besteht. Statt einer derartigen K'-in-K'-Gewindeverbindung kann jedoch auch ein anderes Befestigungssystem zum Befestigen des Grundelementes 4 am Bauteil B 1 vorgesehen werden.

Wenn die Baueinheit 2 an dem Bauteil B1 befestigt ist, wird die Befestigungsschraube 10 von oben her in die Durchgangsbohrung des Grundelementes 4 eingesteckt, bis die Klemmvorsprünge 34 des Mitnehmers 8 am Gewinde der Befestigungsschraube 10 reibschlüssig anliegen. Wird nun die Befestigungsschraube 10 gedreht, so dreht sie über die Klemmvorsprünge 34 den Mitnehmer 8 und über den Mitnehmer 8 die Verstellbuchse 6 mit. Im dargestellten Ausführungsbeispiel ist die Gewindepaarung G 1 zwischen dem Grundelement 4 und der Verstellbuchse 6 als linksgängige Gewindepaarung ausgebildet, so dass die Verstellbuchse 6 beim Mitschleppen durch die Befestigungsschraube 10 (in den Figuren 8, 9) nach oben geschraubt wird, bis sich die Verstellbuchse 6 an das Bauteil B2 anlegt. Wird die Befestigungsschraube 10 weitergedreht, so erhöht sich das Drehmoment, wodurch die Reibschlussverbindung zwischen der Befestigungsschraube 10 und den Klemmvorsprüngen 34 des Mitnehmers 8 gelöst wird. Die Schraube 10 kann nun in das Grundelement 4 eingeschraubt werden, wobei das Gewinde der Befestigungsschraube 10 und das Gewinde 14 des Grundelementes 4 eine zweite Gewindepaarung G2 bilden. Diese Gewindepaarung ist im dargestellten Ausführungsbeispiel rechtsgängig, also entgegengesetzt zur Gewindepaarung G1 ausgebildet, so dass nun die beiden Bauteile B1 und B2 über die Baueinheit 2 mittels der Befestigungsschraube 10 verspannt werden können.

Wie bereits erwähnt, ist die Relaxation der verwendeten Werkstoffe des Grundelements 4 und der Verstellbuchse nahezu Null, so dass die Verspannung der beiden Bauteile B1 und B2 auch langfristig und bei hohen Drücken gewährleistet bleibt.

Wird die Befestigungsschraube 10 wieder gelöst, so dreht sie die Verstellbuchse 6 wieder nach unten in ihre Ausgangslage. Wenn der Abstand A sich geändert hat (z.B. bei nachträglicher Ausrichtung von Fugenmaßen), kann der Abstand A dann erneut überbrückt werden.

Um die Verstellbuchse 6 ohne Schwierigkeiten vom Bauteil B2 wieder lösen zu können, hat z.B. die Stirnseite 27 der Verstellbuchse 6 eine glatte Anlagefläche, die zweckmäßigerweise auf einen ringförmigen Außenrand der Stirnfläche 27 begrenzt ist. Die restliche Stirnseite ist dann gegenüber dieser ringförmigen Anlagefläche zurückversetzt, indem sie beispielsweise konkav ausgebildet ist.

Es versteht sich, dass die Abmessungen (Länge und Durchmesser) der Gewindepaarungen G 1 und G2 variabel gestaltet werden können, um je nach Anwendungsfall entsprechende Anforderungen zu erfüllen. Auch versteht es sich, dass die Gewindepaarung G 1 auch rechtsgängig und die Gewindepaar G2 linksgängig ausgebildet werden könnten.

## Patentansprüche

1. Toleranzausgleichsanordnung zum selbsttätigen Ausgleichen von Toleranzen im Abstand zwischen zwei miteinander zu verspannenden Bauteilen (B1, B2), bestehend aus
einer Befestigungsschraube (10),
einem Grundelement (4), das an einem ersten der beiden Bauteile (B1, B2) festlegbar ist,
einer Verstellbuchse (6), die durch eine Verstellung relativ zum Grundelement (4) in Anlage mit dem zweiten Bauteil (B2) für den Toleranzausgleich bewegbar ist,
wobei das Grundelement (4) und die Verstellbuchse (6) eine erste Gewindepaarung (G1) einer vorgegebenen Gangrichtung zum Verstellen der Verstellbuchse (6) relativ zum Grundelement (4) bilden und das Grundelement (4) und die Befestigungsschraube (10) eine zweite Gewindepaarung der entgegengesetzten Gangrichtung zum Verspannen der beiden Bauteile (B1, B2) bilden,
und einem Mitnehmer (8), der als getrenntes Bauteil ausgebildet und mit der Verstellbuchse (6) lösbar verbunden ist und der mehrere in Umfangsrichtung verteilte, elastisch nachgebende Klemmabschnitte (34) hat, die mit dem Gewinde der Befestigungsschraube (10) eine oberhalb eines vorgegebenen Drehmomentes lösbare Reibschlussverbindung bilden, wobei der Mitnehmer (8) als Ringkörper (32) ausgebildet ist, und die Verstellbuchse (6) als im Wesentlichen hohlzylindrischer Körper (24) mit einem an einem axialen Ende angeformten Flansch (26) ausgebildet ist,
**dadurch gekennzeichnet,**
**dass** am Ringkörper (32) des Mitnehmers (8) radial nach außen verlaufende Haltearme (36) angeformt sind, die an ihren radial äußeren Enden in axiale Halteansätze (38) mit Rastnasen (40) übergehen, die an einer Gegenfläche der Verstellbuchse (6) anliegen, und
**dass** die Verstellbuchse (6) mit einer den Flansch (26) durchdringenden Ausnehmung (30) versehen ist, deren Form an die Form des Mitnehmers (8) so angepasst ist, dass der Ringkörper (32) mit den Haltearmen (36) vollständig von der Verstellbuchse (6) aufgenommen wird.

2. Toleranzausgleichsanordnung nach Anspruch 1, **dadurch gekennzeichnet, dass** das Grundelement (4) und die Verstellbuchse (6) aus einem relaxationsarmen Kunststoff, insbesondere aus einem Duroplast, bestehen.

3. Toleranzausgleichsanordnung nach Anspruch 1 oder 2, **dadurch gekennzeichnet, dass** der Mitnehmer (8) aus einem elastisch nachgiebigem Kunststoff, insbesondere aus einem Thermoplast, besteht.

4. Toleranzausgleichsanordnung nach einem der vorhergehenden Ansprüche, **dadurch gekennzeichnet, dass** die Klemmabschnitte von Klemmvorsprüngen (34) gebildet werden, die am Innenumfang des Ringkörpers (32) vorgesehen sind.

5. Toleranzausgleichsanordnung nach einem der vorhergehenden Ansprüche, **dadurch gekennzeichnet, dass** die Verstellbuchse (6) an einer Stirnseite (27) mit einer polierten Anlagefläche zwecks Anlage an dem zweiten Bauteil (B2) versehen ist.

6. Toleranzausgleichsanordnung nach Anspruch 5, **dadurch gekennzeichnet, dass** die Anlagefläche der Verstellbuchse (6) gegenüber der angrenzenden Stirnseite des Mitnehmers (8) geringfügig vorsteht oder zu dieser fluchtet.

7. Toleranzausgleichsanordnung nach einem der vorhergehenden Ansprüche, **dadurch gekennzeichnet, dass** das Grundelement (4) einen Befestigungsabschnitt (18) mit einem selbstschneidenden und/oder -formenden Gewinde (19) hat, das zum Herstellen einer Schraubverbindung in das erste Bauteil (B1) einschraubbar ist.

8. Toleranzausgleichsanordnung nach einem der vorhergehenden Ansprüche, **dadurch gekennzeichnet, dass** das Grundelement (4) einen hülsenförmigen Körper (12) aufweist, der ein Verstellgewinde für die erste Gewindepaarung (G1) und ein Innengewinde (14) für die zweite Gewindepaarung (G2) aufweist.

9. Toleranzausgleichsanordnung nach Anspruch 8, **dadurch gekennzeichnet, dass** die erste Gewindepaarung (G1) aus einem Außengewinde (20) des Grundelementes (4) und einem Innengewinde (28) der Verstellbuchse (6) besteht.

10. Toleranzausgleichsanordnung nach Anspruch 8, **dadurch gekennzeichnet, dass** die erste Gewindepaarung aus einem Innengewinde des Grundelementes und einem Außengewinde der Verstellbuchse besteht.

11. Toleranzausgleichsanordnung nach einem der Ansprüche 8 bis 10, **dadurch gekennzeichnet, dass** der hülsenförmige Körper (12) des Grundelementes (4) an seinem Innenumfang mit einem Antriebsmerkmal (16) zum Ansetzen eines Werkzeuges versehen ist.

12. Toleranzausgleichsanordnung nach einem der vorhergehenden Ansprüche, **dadurch gekennzeichnet, dass** das Grundelement (4), die Verstellbuchse (6) und der Mitnehmer (8) eine vormontierbare Baueinheit (2) bilden.

13. Toleranzausgleichsanordnung nach Anspruch 12, **dadurch gekennzeichnet, dass** der Mitnehmer (8) und das Grundelement (4) mit Arretierungsmitteln (42, 44) für eine Transportsicherung der Baueinheit (2) versehen sind.

14. Toleranzausgleichsanordnung nach Anspruch 13, **dadurch gekennzeichnet, dass** die Arretierungsmittel aus über den Umfang verteilten, rastend ineinander greifenden Noppen (42, 44) des Mitnehmers (8) und des Grundelementes (4) bestehen.

15. Vormontierbare Baueinheit (2) für eine Toleranzausgleichsanordnung
zum selbsttätigen Ausgleichen von Toleranzen im Abstand zwischen zwei miteinander zu verspannenden Bauteilen (B1, B2), welche Baueinheit besteht aus
einem Grundelement (4), das an einem ersten der beiden Bauteile (B1, B2) festlegbar ist, eine Verstellbuchse (6), die durch eine Verstellung relativ zum Grundelement (4) in Anlage mit dem zweiten Bauteil (B2) für den Toleranzausgleich bewegbar ist,
wobei das Grundelement (4) und die Verstellbuchse (6) eine Gewindepaarung (G1) einer vorgegebenen Gangrichtung zum Verstellen der Verstellbuchse (6) relativ zum Grundelement (4) bilden, und das Grundelement (4) ein Gewinde (14) derart aufweist, dass zum Verspannen der beiden Bauteile (B1, B2) das Gewinde (14) des Grundelements (4) zusammen mit dem Gewinde einer mit der Baueinheit die Toleranzausgleichsanordnung ausbildenden Befestigungsschraube eine zweite Gewindepaarung der entgegengesetzten Gangsrichtung bildet,
und einem Mitnehmer (8), der als getrenntes Bauteil ausgebildet und mit der Verstellbuchse (6) lösbar verbunden ist und der mehrere in Umfangsrichtung verteilte, elastisch nachgebende Klemmabschnite (34) hat die zum Bilden einer mit dem Gewinde der Befestigungsschraube oberhalb eines vorgegebenen Drehmomentes lösbaren Reibsschlussverbindung vorgesehen sind, wobei der Mitnehmer (8) als Ringkörper (32) ausgebildet ist, und die Verstellbuchse (6) als im Wesentlichen hohlzylindrischer Körper (24) mit einem an einem axialen Ende angeformten Flansch (26) ausgebildet ist,
**dadurch gekennzeichent,**
**dass** am Ringkörper (32) des Mitnehmers (8) radial nach außen verlaufende Haltearme (36) angeformt sind, die an ihren radial äußeren Enden in axiale Halteansätze (38) mit Rastnasen (40) übergehen, die an einer Gegenfläche der Verstellbuchse (6) anliegen, und
dass die Verstellbuchse (6) mit einer den Flansch (26) durchdringenden Ausnehmung (30) versehen ist, deren Form an die Form des Mitnehmers (8) so angepasst ist, dass der Ringkörper (32) mit den Haltearmen (36) vollständig von der Verstellbuchse (6) aufgenommen wird.

## Claims

1. Tolerance compensating assembly for automatically compensating tolerances in the spacing between two structural members (B1, B2) to be clamped together, comprising
a mounting bolt (10),
a base element (4), affixable to the first of said two structural members (B1, B2),
an adjustment sleeve (6) which is movable to compensate tolerance in arrangement with the second structural member (B2) by an adjustment relative to the base element (4), wherein said base element (4) and said adjustment sleeve (6) form a first thread pairing (G1) of a predetermined spiral direction for adjusting the adjustment sleeve (6) relative to the base element (4) and the base element (4) and said mounting bolt (10) form a second thread pairing in the opposite spiral direction for clamping said two structural members (B1, B2),
and a driver (8) configured as a separate structural member and disengageably connected to the adjustment sleeve (6) and having a plurality of flexibly resilient clamping portions (34) spaced along its periphery which form a disengageable frictional contact with the thread of mounting bolt (10) above a predetermined torsional force, wherein the driver (8) is configured as annular body (32) and the adjustment sleeve (6) is substantially configured as a hollow cylindrical body (24) having a flange (26) fit to one axial end,
**characterized in that**
radially outwardly extending brackets (36) are fitted to the annular body (32) of the driver (8), which pass into axial retaining extensions (38) with retention tabs (40) at their radial outer ends, which fit to a mating face of the adjustment sleeve (6), and **in that**
the adjustment sleeve (6) has a slot (30), which penetrates the flange (26), the slot (30) has a shape which is adapted to the shape of the driver (8) so that the annular body (32) having the brackets (36) is fully received in the adjustment sleeve (6).

2. Tolerance compensating assembly according to claim 1, **characterized in that** the base element (4) and the adjustment sleeve (6) are made of a low-relaxation plastic, more preferably a duroplast.

3. Tolerance compensating assembly according to claim 1 or claim 2, **characterized in that** the driver (8) is made of a flexibly resilient plastic, more preferably a thermoplast.

4. Tolerance compensating assembly according to one of the preceding claims, **characterized in that** the clamping portions are formed by clamping projections (34) provided on the inner periphery of the annular body (32).

5. Tolerance compensating assembly according to one of the preceding claims, **characterized in that** the adjustment sleeve (6) is provided with a polished contact surface on a face side (27) for the purpose of fitting to said second structural member (B2).

6. Tolerance compensating assembly according to claim 5, **characterized in that** the said contact surface of the adjustment sleeve (6) projects slightly relative to the adjacent face side of the driver (8) or is aligned with same.

7. Tolerance compensating assembly according to one of the preceding claims, **characterized in that** said base element (4) comprises a mounting portion (18) having a self-tapping and/or formed thread (19) which can be screwed into said first structural member (B1) to produce a screwed connection.

8. Tolerance compensating assembly according to one of the preceding claims, **characterized in that** the base element (4) has a sleeve-shaped body (12) which has an adjustment thread for said first thread pairing (G1) and an internal threading (14) for said second thread pairing (G2).

9. Tolerance compensating assembly according to claim 8, **characterized in that** said first thread pairing (G1) is made of an external threading (20) of the base element (4) and an internal threading (28) of said adjustment sleeve (6).

10. Tolerance compensating assembly according to claim 8, **characterized in that** said first thread pairing is made of an internal threading of said base element and an external threading of said adjustment sleeve.

11. Tolerance compensating assembly according to one of the claims 8 to 10, **characterized in that** said sleeve-shaped body (12) of the base element (4) is provided with a drive feature (16) at its inner periphery for the attachment of a tool.

12. Tolerance compensating assembly according to one of the preceding claims, **characterized in that** the base element (4), the adjustment sleeve (6) and the driver (8) form a structural unit (2) which can be preassembled.

13. Tolerance compensating assembly according to claim 12, **characterized in that** the driver (8) and the base element (4) are provided with locking means (42, 44) as a securing device for the structural unit (2).

14. Tolerance compensating assembly according to claim 13, **characterized in that** said locking means is made of engaging latching nubs (42, 44) spaced over the periphery of the driver (8) and the base element (4).

15. Structural unit (2) for a tolerance compensating assembly which can be preassembled for automatically compensating tolerances in the spacing between two structural members (B1, B2) to be clamped together, the structural unit comprising
a base element (4), affixable to the first of said two structural members (B1, B2),
an adjustment sleeve (6) which is movable to compensate tolerance in arrangement with the second structural member (B2) by an adjustment relative to the base element (4), wherein said base element (4) and said adjustment sleeve (6) form a thread pairing (G1) of a predetermined spiral direction for adjusting the adjustment sleeve (6) relative to the base element (4) and the base element (4) having a threading (14) so that for clamping together the two structural members (B1, B2) the threading (14) of said base element (4) together with the threading of a mounting bolt, which forms with said structural unit said tolerance compensating assembly, forms a second thread pairing in the opposite spiral direction, and
a driver (8) configured as a separate structural member and disengageably connected to the adjustment sleeve (6) and having a plurality of flexibly resilient clamping portions (34) spaced along its periphery which are designated for forming a disengageable frictional contact with the thread of said mounting bolt above a predetermined torsional force, wherein the driver (8) is configured as annular body (32) and the adjustment sleeve (6) is substantially configured as a hollow cylindrical body (24) having a flange (26) fit to one axial end,
**characterized in that**
radially outwardly extending brackets (36) are fitted to the annular body (32) of the driver (8), which pass into axial retaining extensions (38) with retention tabs (40) at their radial outer ends, which fit to a mating face of the adjustment sleeve (6), and **in that**
the adjustment sleeve (6) has a slot (30), which penetrates the flange (26), the slot (30) has a shape which is adapted to the shape of the driver (8) so that the annular body (32) having the brackets (36) is fully received in the adjustment sleeve (6).

## Revendications

1. Dispositif de compensation de tolérances pour la compensation automatique de tolérances dans l'écartement entre deux éléments de construction (B1, B2) à assembler, constitué de
une vis de fixation (10),
un élément de base (4) qui peut être fixé à un premier des deux éléments de construction (B1, B2),
une douille de réglage (6) qui peut être déplacée par un réglage par rapport à l'élément de base (4) en appui contre le second élément de construction (B2) pour la compensation de tolérances,
l'élément de base (4) et la douille de réglage (6) formant un premier appariement fileté (G1) d'une direction de pas prédéfinie pour le réglage de la douille de réglage (6) par rapport à l'élément de base (4) et l'élément de base (4) et la vis de fixation (10) formant un second appariement fileté de la direction de pas opposée pour l'assemblage des deux éléments de construction (B1, B2),
et un entraîneur (8) qui est formé en tant qu'élément de construction à part et raccordé de manière détachable à la douille de réglage (6) et qui présente plusieurs sections de serrage (34) compressibles de manière élastique, distribuées dans la direction circonférentielle, qui forment avec le filet de la vis de fixation (10) un assemblage par frottement détachable au-delà d'un couple de rotation prédéfini, l'entraîneur (8) étant formé en tant que corpus annulaire (32) et la douille de réglage (6) étant formée en tant que corps essentiellement cylindrique creux (24) avec un collet (26) formé à une extrémité axiale,
**caractérisé en ce que,**
sur le corps annulaire (32) de l'entraîneur (8) sont formés des bras de retenue (36) s'étendant radialement vers l'extérieur, qui, à leurs extrémités radialement extérieures, se transforment en des appendices de retenue (38) axiaux avec des talons d'encliquetage (40) qui appuient contre une surface antagoniste de la douille de réglage (6), et
**en ce que** la douille de réglage (6) est pourvue d'un évidement (30) pénétrant dans le collet (26), la forme de l'évidement étant adaptée à la forme de l'entraîneur (8) de telle sorte que le corps annulaire (32) est reçu complètement avec les bras de retenue (36) par la douille de réglage (6).

2. Dispositif de compensation de tolérances selon la revendication 1, **caractérisé en ce que** l'élément de base (4) et la douille de réglage (6) sont constitués d'une matière plastique à faible relaxation, en particulier en un thermodurcissable.

3. Dispositif de compensation de tolérances selon la revendication 1 ou 2, **caractérisé en ce que** l'entraîneur (8) est constitué d'une matière plastique compressible de manière élastique, en particulier en un thermoplastique.

4. Dispositif de compensation de tolérances selon l'une des revendications précédentes, **caractérisé en ce que** les sections de serrage sont formées par des saillies de serrage (34), qui sont prévues sur la circonférence intérieure du corps annulaire (32).

5. Dispositif de compensation de tolérances selon l'une des revendications précédentes, **caractérisé en ce que** la douille de réglage (6) est pourvue sur une face frontale (27) d'une surface d'appui polie en vue de l'appui contre le second élément de construction (B2).

6. Dispositif de compensation de tolérances selon la revendication 5, **caractérisé en ce que** la surface d'appui de la douille de réglage (6) dépasse légèrement par rapport à la face frontale adjacente de l'entraîneur (8) ou s'aligne avec celle-ci.

7. Dispositif de compensation de tolérances selon l'une des revendications précédentes, **caractérisé en ce que** l'élément de base (4) présente une section de fixation (18) avec un filet (19) autotaraudeur et/ou autoformeur qui peut être vissé dans le premier élément de construction (B1) pour produire un raccord vissé.

8. Dispositif de compensation de tolérances selon l'une des revendications précédentes, **caractérisé en ce que** l'élément de base (4) présente un corps en forme de manchon (12) qui présente un filet de réglage pour le premier appariement fileté (G1) et un filet intérieur (14) pour le second appariement fileté (G2).

9. Dispositif de compensation de tolérances selon la revendication 8, **caractérisé en ce que** le premier appariement fileté (G1) est constitué d'un filet extérieur (20) de l'élément de base (4) et un filet intérieur (28) de la douille de réglage (6).

10. Dispositif de compensation de tolérances selon la revendication 8, **caractérisé en ce que** le premier appariement fileté est constitué d'un filet intérieur de l'élément de base et un filet extérieur de la douille de réglage.

11. Dispositif de compensation de tolérances selon l'une des revendications 8 à 10, **caractérisé en ce que** le corps en forme de manchon (12) de l'élément de base (4) est pourvu à sa circonférence intérieure d'une caractéristique d'entraînement (16) pour l'application d'un outil.

12. Dispositif de compensation de tolérances selon l'une des revendications précédentes, **caractérisé en ce que** l'élément de base (4), la douille de réglage (6) et l'entraîneur (8) forment un sous-ensemble (2) prémontable.

13. Dispositif de compensation de tolérances selon la revendication 12, **caractérisé en ce que** l'entraîneur (8) et l'élément de base (4) sont pourvus de moyens de blocage (42, 44) pour une sécurité de transport du sous-ensemble (2).

14. Dispositif de compensation de tolérances selon la revendication 13, **caractérisé en ce que** les moyens de blocage sont constitués de boutons (42, 44) de l'entraîneur (8) et de l'élément de base (4), distribués sur la circonférence, engrenant les uns dans les autres par encliquetage.

15. Sous-ensemble prémontable (2) pour un dispositif de compensation de tolérance pour la compensation automatique de tolérances dans l'écartement entre deux éléments de construction (B1, B2) à assembler, le sous-ensemble étant constitué de
un élément de base (4) qui peut être fixé à un premier des deux éléments de construction (B1, B2), une douille de réglage (6) qui peut être déplacée par un réglage par rapport à l'élément de base (4) en appui contre le second élément de construction (B2) pour la compensation de tolérances,
l'élément de base (4) et la douille de réglage (6) formant un appariement fileté (G1) d'une direction de pas prédéfinie pour le réglage de la douille de réglage (6) par rapport à l'élément de base (4), et l'élément de base (4) présentant un filet (14) de telle sorte que pour l'assemblage des deux éléments de construction (B1, B2), le filet (14) de l'élément de base (4) forme, avec le filet d'une vis de fixation constituant avec le sous-ensemble le dispositif de compensation de tolérances, un second appariement fileté de la direction de pas opposée,
et un entraîneur (8) qui est formé en tant qu'élément de construction à part et raccordé de manière détachable à la douille de réglage (6) et qui présente plusieurs sections de serrage (34) compressibles de manière élastiques, distribuées dans la direction circonférentielle, qui sont prévues pour former un assemblage par frottement détachable avec le filet de la vis de fixation au-delà d'un couple de rotation prédéfini, l'entraîneur (8) étant formé en tant que corps annulaire (32), et la douille de réglage (6) étant formée en tant que corps essentiellement cylindrique creux (24) avec un collet (26) formé à une extrémité axiale,
**caractérisé en ce que,**
sur le corps annulaire (32) de l'entraîneur (8) sont formés des bras de retenue (36) s'étendant radialement vers l'extérieur, qui se transforment à leurs extrémités radialement extérieures en des appendices de retenue (38) axiaux avec des talons d'encliquetage (40) qui appuient contre une surface antagoniste de la douille de réglage (6), et
**en ce que** la douille de réglage (6) est pourvue d'un évidement (30) pénétrant dans le collet (26), la forme de l'évidement étant adaptée à la forme de l'entraîneur (8) de telle sorte que le corps annulaire (32) est reçu complètement avec les bras de retenue (36) par la douille de réglage (6).
